# EUROPEAN PATENT APPLICATION

(11) **EP 1 501 015 A1**
(43) Date of publication of application: **26.01.2005**
(21) Application number: 02807178.5
(22) Date of filing: 09.04.2002
(51) Int. Cl.: G06F 13/00

(54) **MAIL ARRIVAL NOTIFYING SYSTEM AND MAIL DELIVERY APPARATUS**

(71) Applicant: MATSUSHITA ELECTRIC INDUSTRIAL CO., LTD., Kadoma-shi, Osaka 571-8501 (JP)
(72) Inventor: ISHII, Hidenori, Setagaya-ku, Tokyo 156-0044 (JP); TAKESHITA, Sachiko, Suginami-ku, Tokyo 166-0016 (JP); URANAKA, Hiroshi, Bunkyo-ku, Tokyo 113-0021 (JP); ARIYOSHI, Tsutomu, Takarazuka-shi, Hyogo 665-0852 (JP); MITSUDA, Hiroyuki, Ota-ku, Tokyo 144-0034 (JP)
(74) Representative: Balsters, Robert
(86) International application number: PCT/JP2002/003533
(87) International publication number: WO 2003/085527

(57) **Abstract**

The present invention reduces a load of mail arrival notice processing in a system that reports arrival of mail received from the Internet. When mail arrival notice to terminals from a mail delivery device fails, mail arrival notice data is stored in transmission data storage means, and the mail arrival notice is transmitted to the terminals again after a predetermined time elapses. When the mail arrival notice is successfully transmitted, the stored mail arrival notice data is deleted from the mail.delivery device. Or the stored mail arrival notice data is deleted when other mail for the same terminals is received. For failure of mail arrival notice, according to reasons for the failure, retransmission time is changed, and notice priorities are set according to terminal types.

## Description

### BACKGROUND OF THE INVENTION

### Field of the Invention

The present invention relates to a mail arrival notice system that operates in conjunction with a computer and a database, and upon receipt of mail, reports the arrival of the mail to a user of transmission destination of the mail, and a mail delivery device used in the system.

### Description the Prior Art

In recent years, the miniaturization of computers and the development of mobile communication means have enabled the transmission and reception of electronic mail (hereinafter simply referred to as mail) by use of mail dedicated terminals and cellular phones on the road. In normal mail systems, when mail arrives in a provider, it is stored in a mail server. At this time, since the arrival of the mail is not reported to a user, to recognize the arrival of new mail, the user must access the mail server by himself (herself) and obtain the mail. However, since this forces the user to consciously and frequently check for the existence of new mail, there is an increasing demand for the service that reports the arrival of mail to users upon its arrival in providers. Presently, mail arrival notice service is already implemented which, when mail arrives, reports its arrival to terminal adapters of users and pagers, using ISDN User information.

Known technologies on conventional mail arrival notice service are described in Japanese Patent Disclosure Nos. Hei 10-247936, Hei 11-252159, and Hei 11-252160.

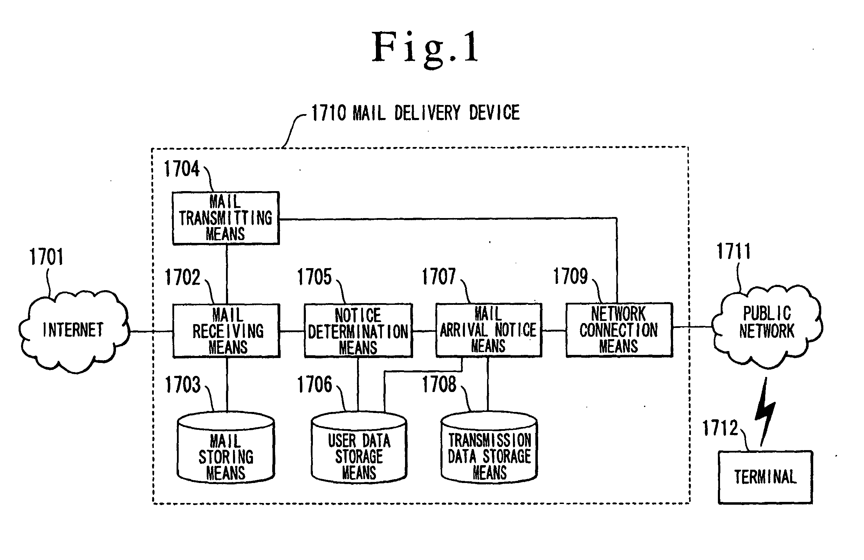

Hereinafter, a mail arrival notice system of the prior art will be described with reference to FIG. 1. In FIG. 1, a reference numeral 1701 designates the Internet that delivers mail. 1702 designates mail receiving means for receiving mail through the Internet 1701. 1703 designates mail storing means for storing received mail. 1704 designates mail transmitting means for delivering received mail. 1705 designates notice determination means for analyzing received mail and deciding whether to report its arrival. 1706 designates user data storage means for storing user information. The user information contains mail control information and notice conditions for specifying mail subject to arrival notice from its text. 1707 designates mail arrival notice means for creating mail arrival notice and requesting the transmission of the mail. 1708 designates transmission data storage means for storing mail arrival notice data. 1709 designates network connection means for actually transmitting mail arrival notice. A mail delivery device 1710 comprises the above means. 1711 is a public network which is connected to network connection means 1709 of the mail delivery device 1710 and relays mail arrival notice. 1712 designates a cellular phone which is connected to the public network 1711 and servers as a terminal for receiving mail arrival notice.

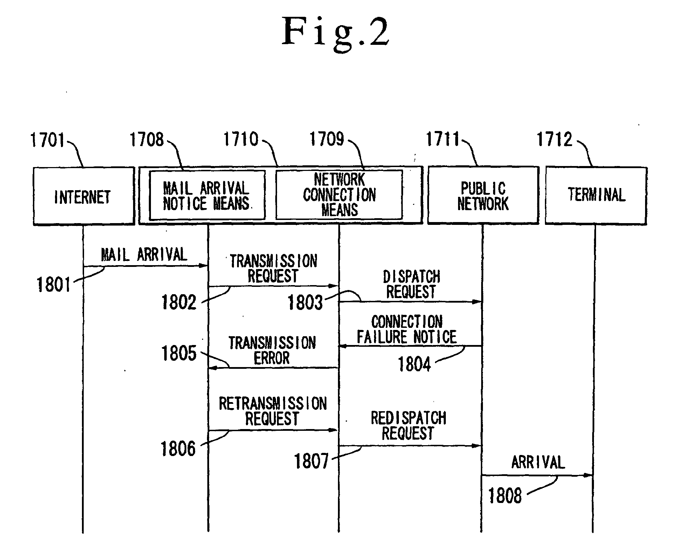

FIG. 2 is a sequence diagram showing the operation of the mail arrival notice system of FIG. 1. When mail arrives (1801) in the mail delivery device 1710 via the Internet 1701, the mail delivery device 1710 transmits a transmission request 1802 for mail arrival notice to the network connection means 1709. The following processing is performed here. The mail receiving means 1702 receives mail and stores it in the mail storing means 1703. The notice determination means 1705 obtains information about a user to transmit the mail to from the user data storage means 1706, and determines whether to report the arrival of the arriving mail, using notice conditions within the user information. When reporting mail arrival, the mail arrival notice means 1707 creates arrival notice and stores it in the transmission data storage means 1708, and transmits a dispatch request 1803 containing mail arrival notice to the network connection means 1709. If the terminal 1712 cannot receive the mail arrival notice because of a busy condition or the like, the public network 1711 outputs connection failure notice 1804 to the network connection means 1709, which transmits a transmission error 1805 to the mail delivery device 1710. The mail delivery device 1710 immediately performs retransmission processing and outputs a retransmission request 1806 to the network connection means 1709. The contents of the retransmission request 1806 are the same as those of the dispatch request 1803. Processing for a next redispatch request 1807 is the same as processing for the dispatch request 1803. If the terminal 1712 becomes capable of receiving a call, mail arrival 1808 is performed, and the terminal 1712 detects mail arrival notice from an identifier for identifying the mail delivery device 1710 contained in the mail arrival notice. Although the identifier can be originally defined, a caller number of the mail delivery device 1710 may be used.

However, the above-described conventional mail arrival notice system has means for retransmitting failed mail arrival notice, and if mail arrival notice occurs continuously for a same user, all failed mail arrival notices are retransmitted. As a result, a processing amount increases, posing a first problem for the mail arrival notice system. Also, when plural pieces of mail arrive, mail arrival notice and retransmission may take place at the same time. In the case where information indicating arrival notice is obtained as in the caller number notice service conveying only the arrival of a call, upon receiving the arrival notice, users immediately take out mail from a mail server, with the result that simultaneous plural notices bring about little effectiveness. In some cases, after arrival notice for certain mail fails, arrival notice for other mail directed to the same user succeeds, and after a user obtains the mail, mail arrival notice for the former mail is retransmitted. This results in retransmitting mail already obtained, increasing meaningless transmission.

Even in the case where the above mail arrival notice succeeds, direct transmission of arriving mail heavily loads terminals and causes the processing capability and storage capacity of the terminals to be exceeded if the mail contains high volumes of data. Moreover, in the cases where video data is transmitted to terminals having the capability to receive only character data, even if arrival notice is issued to transmit mail contents, the terminals can receive not all of the data.

A second problem is that elaborate actions cannot be taken according to user settings and reasons for failure in transmission, so that different actions cannot be taken between a mail arrival notice system and users that are responsible for transmission failure. When terminals are busy or out of the communication-capable area, the terminals will probably become receivable by waiting for retransmission, while, when there is a problem in the mail arrival notice system, the possibility that transmission succeeds changes little even by waiting for retransmission, and the effect of waiting cannot be expected. Consequently, unconditional retransmissions for all transmission failures would involve unnecessary ones.

### SUMMARY OF THE INVENTION

A first object of the present invention is to provide a mail arrival notice system and a mail delivery device that can efficiently perform mail arrival notice, with the mail delivery device reduced in processing and memory capacity.

A second object of the present invention is to provide a mail arrival notice system and a mail delivery device that can appropriately and efficiently perform mail arrival notice according to standby statuses of terminals and terminal types.

A third object of the present invention is to provide a mail arrival notice system and a mail delivery device that can transfer mail to terminals other than terminals of mail arrival destination according to terminal settings or requests from terminals.

The present invention comprises a mail delivery device for delivering mail received through the Internet to terminals; and terminals for requesting arrival notice of receive mail under conditions set in advance for the mail delivery device, wherein, when mail arrival notice to the terminals from the mail delivery device fails, the mail arrival notice data is stored, and the mail arrival notice is transmitted to the terminals again after a predetermined time elapses, while, when the mail arrival notice is successfully transmitted, the stored mail arrival notice data is deleted from the mail delivery device. With this configuration, the mail delivery device can be reduced in processing and memory capacity.

The present invention is characterized in that, when the mail delivery device, after storing the mail arrival notice data, receives other mail directed to the terminals, it temporarily stops transmission of the stored mail arrival notice data, and releases the transmission temporarily stopped when arrival notice of the other mail fails. When arrival notice of the other mail received later succeeds, since arrival notice of the previous mail becomes unnecessary, by temporarily stopping transmission of the previous mail at the time of reception of the other mail, the mail delivery device can be reduced in processing and memory capacity.

The present invention is characterized in that, when the mail delivery device, after storing the mail arrival notice data, receives other mail directed to the terminals, it deletes the stored mail arrival notice data. When arrival notice of the other mail received later succeeds, since arrival notice of the previous mail becomes unnecessary, by deleting a request to transmit the previous mail at the time of reception of the other mail, the mail delivery device can be reduced in processing and memory capacity.

The present invention is characterized in that the mail delivery device can set any number of retransmissions of mail arrival notice. Thereby, the mail delivery device can be reduced in processing and memory capacity.

The present invention is characterized in that the mail delivery device changes conditions for transmitting mail arrival notice to the terminals, based on reasons for failure in transmission. Elaborate mail arrival notice is made according to standby statuses of terminals to reduce failures in mail arrival by lengthening a retransmission interval when the terminals are out of communication-capable area, and shortening a retransmission interval when the terminals are busy.

The present invention is characterized in that users of the terminals have plural terminals of different types, and the mail delivery device, at the time of the mail arrival, assigns priorities to the plural terminals according to mail contents, notice conditions, or terminal capabilities and transmits mail arrival notice. Elaborate mail arrival notice is made according to whether the terminals are cellular phones, PHS, or PDA. This makes it possible to reduce cases where data whose arrival is reported cannot be downloaded or received for lack of the capability of the terminals.

The present invention is characterized in that users of the terminals have plural terminals of different types, and the mail delivery device, at the time of the mail arrival, converts mail arrival notice or mail text into a format meeting mail contents, notice conditions, or terminal capabilities. Mail arrival notice or mail transmission is performed in an appropriate format according to whether the terminals are cellular phones, PHS, or PDA, and the mail can be read in a terminal format as closely to the original as possible.

The present invention provides a mail transfer instruction function for terminals to transfer mail to, wherein, upon receipt of mail arrival notice, the terminals make a request to transfer the mail, and upon receipt of the transfer request, mail arrival notice means transmits arriving mail to a terminal of transfer destinations. Thereby, the terminals can, without an increase in load, receive mail using terminals of specified transfer destinations.

The present invention registers plural pieces of terminal information of users in the user data storage means, registers terminal information of transfer destinations and transfer instructions in at least some of terminals, wherein the mail arrival notice means reports mail arrival to the some of terminals and automatically transfers arriving mail to a terminal of transfer destination. Thereby, without users' special operations, the terminals can, without an increase in load, receive mail using a terminal of a specified transfer destination.

The above-described objects and advantages of the present invention will become more apparent from the description of embodiments described below with reference to the drawings.

### BRIEF DESCRIPTION OF THE DRAWINGS

FIG. 1 is a block diagram showing the configuration of a prior art mail arrival notice system;
FIG. 2 is an operation sequence diagram of the prior art;
FIG. 3 is a block diagram showing the configuration of a mail arrival notice system in a first embodiment of the present invention;
FIG. 4 is a detailed block diagram showing mail arrival notice means in the first embodiment of the present invention;
FIG. 5 is a diagram showing the structure of data fields within user data storage means in the first embodiment of the present invention;
FIG. 6 is a diagram showing the structure of data fields within transmission data storage means in the first embodiment of the present invention;
FIG. 7 is a diagram showing the structure of data fields within retransmission data storage means in the first embodiment of the present invention;
FIG. 8 is a diagram showing the structure of data fields of mail arrival notice in the first embodiment of the present invention;
FIG. 9 is a diagram showing the structure of data fields of transmission result notice in the first embodiment of the present invention;
FIG. 10 is an operation sequence diagram in the first embodiment of the present invention;
FIG. 11 is an operation sequence diagram and a data transition diagram in the first embodiment of the present invention;
FIG. 12 is an operation sequence diagram in a second embodiment of the present invention;
FIG. 13 is a detailed block diagram showing mail arrival notice means in a third embodiment of the present invention;
FIG. 14 is a diagram showing the structure of data fields of a retransmission control table in the third embodiment of the present invention;
FIG. 15 is a flowchart of operation in the third embodiment of the present invention;
FIG. 16 is a block diagram showing the configuration of a mail arrival notice system in a fourth embodiment of the present invention;
FIG. 17 is a diagram showing the structure of data fields within user data storage means in the fourth embodiment of the present invention;
FIG. 18 is a diagram showing the structure of data fields of mail arrival notice information in the fourth embodiment of the present invention;
FIG. 19 is a diagram showing the structure of data fields of mail arrival notice information in the fourth embodiment of the present invention; and
FIG. 20 is a diagram showing the structure of data fields of mail arrival notice information in the fourth embodiment of the present invention.

### DESCRIPTION OF THE PREFERRED EMBODIMENTS

Hereinafter, preferred embodiments of the present invention will be described with reference to the drawings. The following description assumes that mail to identical terminals has identical notice conditions. The present invention is not limited to these embodiments and may be embodied in various forms without departing from the spirit and scope of the present invention.

### (First embodiment)

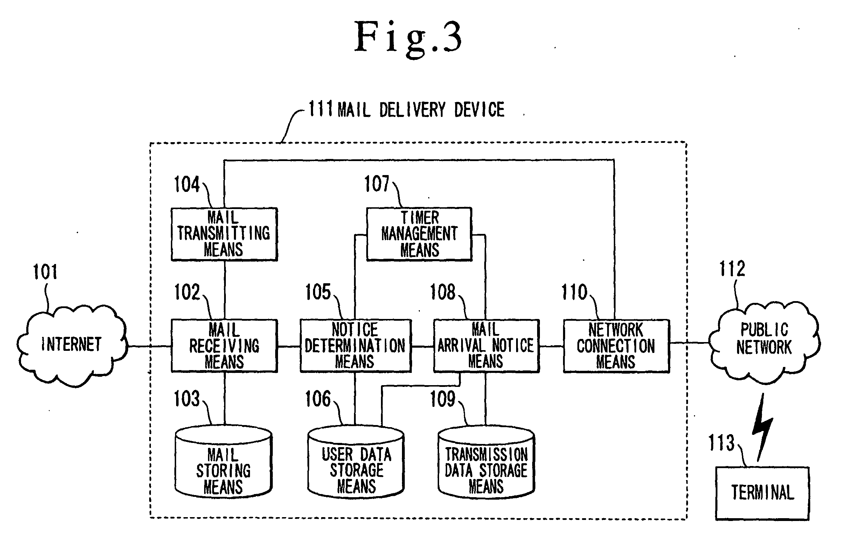

Hereinafter, a first embodiment of the present invention will be described. FIG. 3 shows the configuration of a mail arrival notice system in a first embodiment of the present invention. In FIG. 3, a reference numeral 101 designates the Internet through which mail is delivered. 102 designates mail receiving means for receiving mail through the Internet 101. 103 designates mail storing means for storing received mail. 104 designates mail transmitting means for delivering received mail to a terminal. 105 designates notice determination means for analyzing received mail and deciding whether to report. 106 designates user data storage means for storing user information. The user information contains mail control information and notice conditions for specifying mail subject to arrival notice from its text data. 107 designates timer management means for managing the time of a mail delivery device. 108 designates mail arrival notice means for creating mail arrival notice and requesting the transmission of the mail. 109 designates transmission data storage means for storing mail arrival notice data. 110 designates network connection means for actually transmitting mail arrival notice. A mail delivery device 111 comprises the above means. As the network connection means 110, a modem, PBX, terminal adapter, and line processing board may be used. 112 designates a public network for relaying mail arrival notice, which is preferably a subscriber telephone network, ISDN network, and cellular phone network. 113 designates a terminal, connected to the public network 112, which can receive mail arrival notice. As transmission protocols for mail arrival notice, there may be used protocols such as phone call, transmission by use of ISDN Q.931 interface, and the packet system (PDC-P) for cellular phones. As the terminal 113, there may be used subscriber phones, FAX, PDC (Personal Digital Cellular: RCR STD-27), PHS (Personal Handyphone System: RCR STD-28), GSM (Global System for Mobile), and cellular phones of TDMA and CDMA systems. As configurations, there may be used normal cellular phones, electronic notes, PDA, and formats included in PC card.

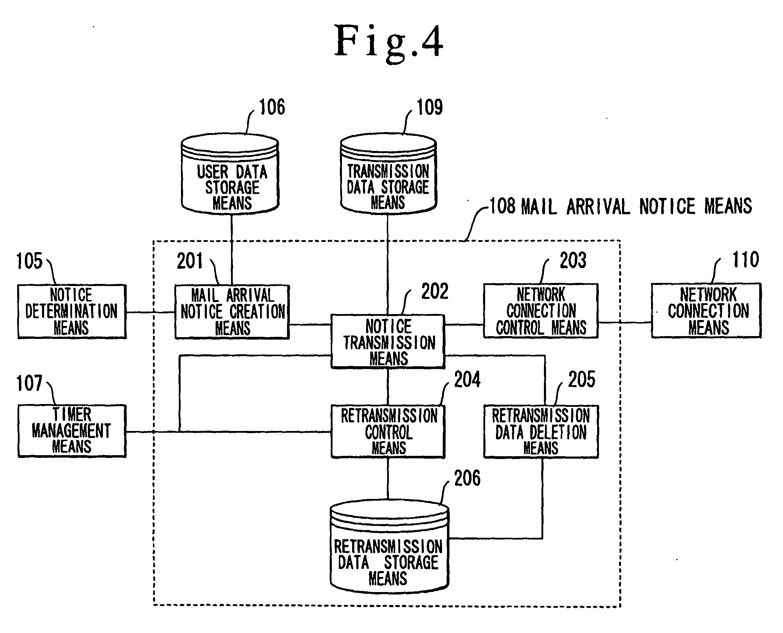

FIG. 4 shows details of the mail arrival notice means 108. In FIG. 4, 201 designates mail arrival notice creation means for creating mail arrival notice upon request of the notice determination means 105. 202 designates notice transmission means for transmitting mail arrival notice. 203 designate network connection control means for controlling the network connection means 110 according to request of the notice transmission means 202. 204 designates retransmission control means for controlling retransmission. 205 designates retransmission data deletion means for deleting retransmission data according to request of the notice transmission means 202. 206 designates retransmission data storage means for storing retransmission data.

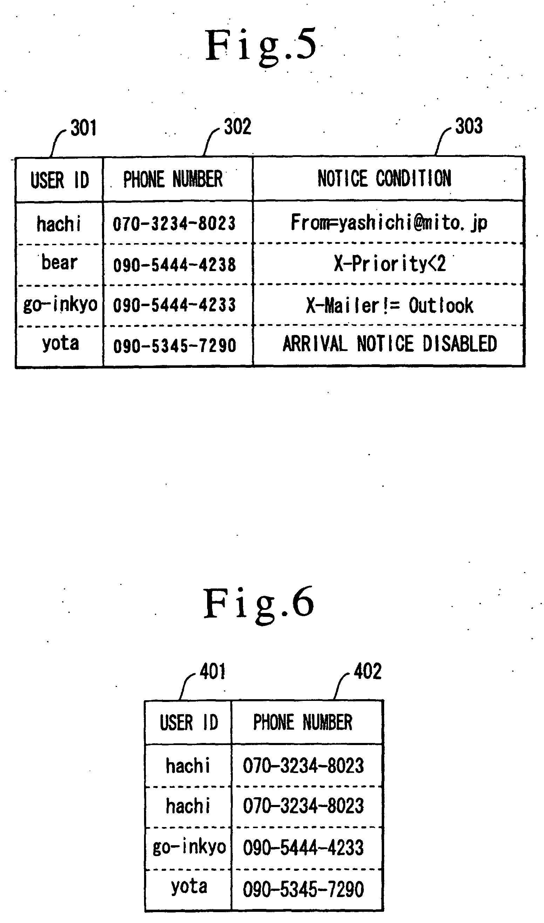

FIGS. 5 to 9 show the structures of data used in a mail arrival notice system 202. These data structures, which show items containing data, have the same effect regardless of a structure change from a table to list structure.

FIG. 5 shows fields of user data contained in the user data storage means 106. The user data storage means 106 may be added with other information. 301 designates user IDs used as identifiers assigned uniquely to users managed in the mail arrival notice system..It will be understood that "hachi", "bear", "go-inkyo", and "yota" are given as user IDs in this example. 302 designates phone numbers of user terminals. 303 designates notice conditions, which are conditions for mail whose arrival is reported. The mail conditions include: date condition specifying date information such as mail transmission time, arrival time, and notice interval; mail count condition specifying the maximum and minimum numbers of pieces of mail to be reported; address condition specifying the mail addresses of mail transmitter and receiver; identifier condition by identifier assigned to each piece of mail such as Message-ID of Internet mail header; spool condition by capacity and mail count for each of users of the mail storing means; contents condition specifying mail contents such as image, sound, document, and keyword; reference condition specified by mail priority information given by transmitters such as X-Priority and Importance, and In-Reply-To, References, and the like of mail header; and client software condition specified by X-Mailer. The notice conditions may not always be contained in user data. The user data storage means 106 may store data indicating notice service provided for each user. The data may include retransmission conditions such as retransmission count and retransmission interval (time from transmission failure to retransmission) and specification of notice contents.

FIG. 6 shows fields of transmission data stored in the transmission data storage means 109. 401 designates user IDs of users of notice destinations. 402 designates phone numbers of users of notice destinations. The transmission data may contain notice contents. The notice contents may include mail matter name, transmitter, transmission time, arrival time, message ID, and text or part thereof.

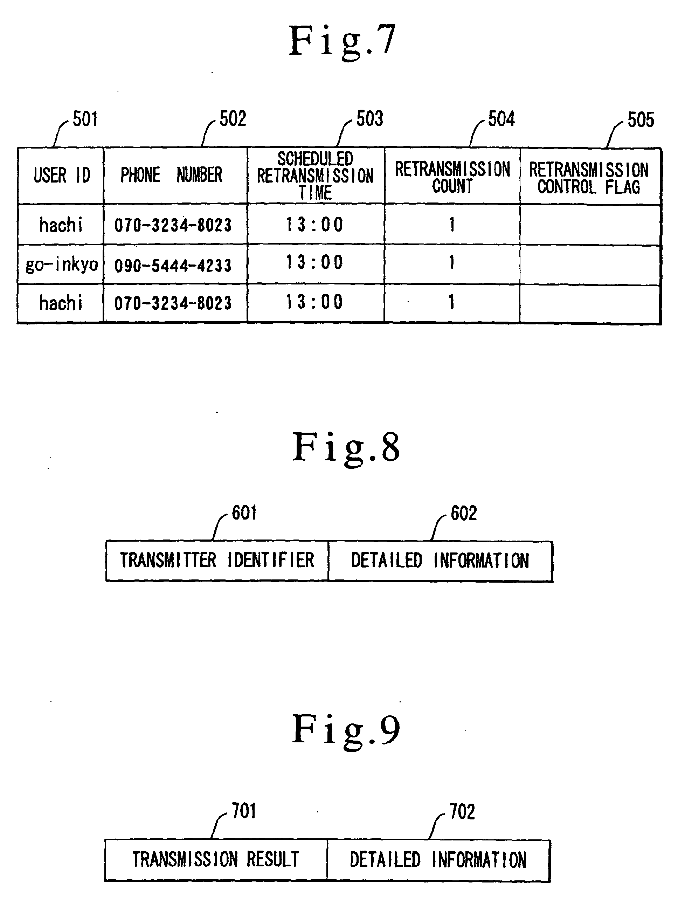

FIG. 7 shows fields of retransmission data stored in the retransmission data storage means 206. 501 designates user IDs of users of notice destinations. 502 designates phone numbers of users of notice destinations. 503 designates scheduled retransmission time of next retransmission. 504 designates retransmission count indicating a remaining number of possible retransmissions. 505 designates a retransmission suppression flag; the retransmission control means 204 does not retransmission data with this flag on.

FIG. 8 shows fields of mail arrival notice that is created by the mail arrival notice creation means 201 and transmitted by the notice transmission means 202. 601 designates transmitter identifiers that indicate mail arrival notice to a terminal from the mail arrival notice system. As the transmitter identifiers, there may be used ones originally defined, in addition to caller numbers of telephone network. 602 designates detailed information, which contains the title name of arriving mail, transmitter address, transmission destination address, transmission time, arrival time, contents information containing text or summary thereof, the identifier of the mail arrival notice system itself, and the like. The mail arrival notice may not contain detailed information.

FIG. 9 shows fields of connection notice outputted to the network connection means 110 by the public network 112. 701 designates a transmission result that indicates success or failure of transmission and a cause of failure if so. As the transmission result, there may be used reason indication of ISDN, for example. 702 designates detailed information, which records more detailed information of the transmission result. The connection notice may not contain the detailed information 702.

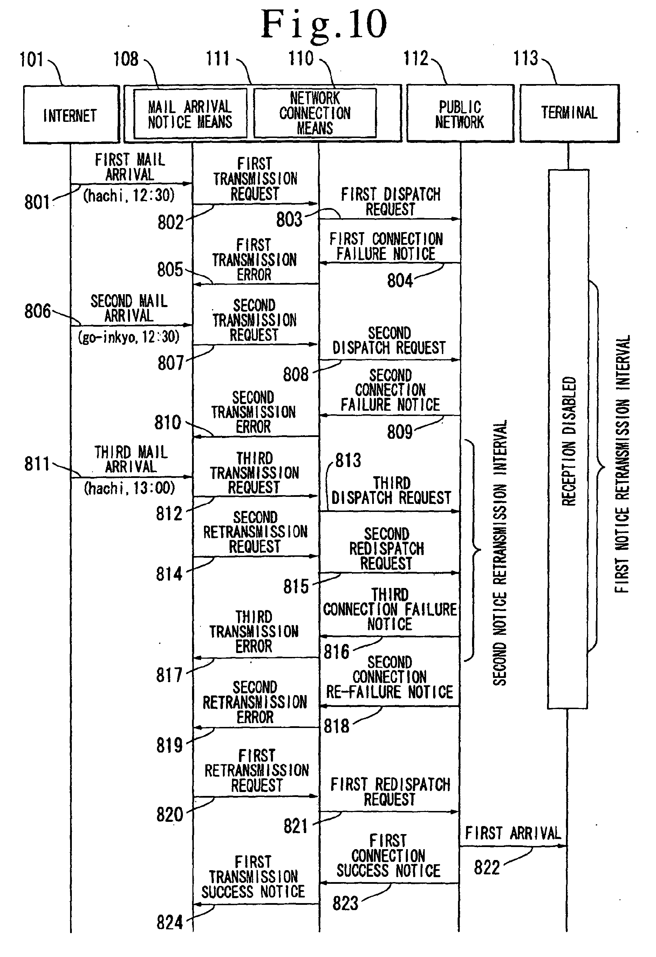

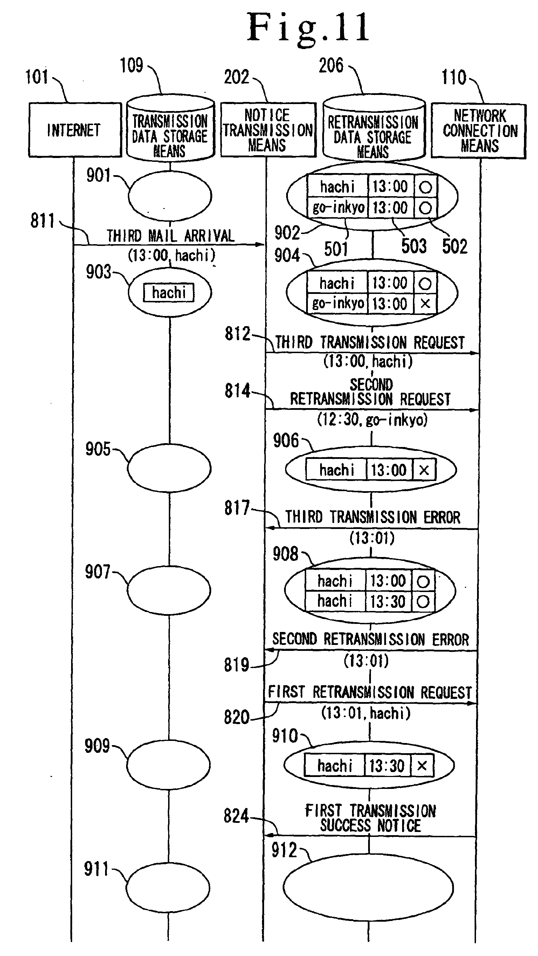

FIG. 10 is a sequence diagram showing a flow of processing in the present embodiment. FIG. 11 is an operation sequence diagram and a data transition diagram in the present embodiment. Hereinafter, processing will be described using FIG. 10. At the same time, to describe details of intermediate processing, there will be used FIG. 11, which contains a combination of transition and sequences of stored data. This example shows the arrival of three pieces of mail, which are respectively referred to as first mail, second mail, and third mail.

In FIG. 10, the first mail for the user hachi arrives (801). The following processing is performed until the mail delivery device 111 outputs a first transmission request 802. First, the mail receiving means 102 receives the first mail and stores it in the mail storing means 103. Second, the notice determination means 105 obtains user information from the user data storage means 106 and determines whether to report the arrival of the first mail from the notice conditions. In this case, it is assumed that mail meeting the notice conditions arrives and mail arrival is reported. Third, the mail arrival notice means 108 creates mail arrival notice and outputs the first transmission request 802. The following processing is performed within the mail arrival notice means 108.

The mail arrival notice creation means 201 creates mail arrival notice. Based on the mail arrival notice, the notice transmission means 202 create transmission data, stores it in the transmission data storage means 109, and requests the network connection control means 203 to transmit mail arrival notice. The network connection control means 203 converts the request into a format interpretable to the network connection means 110 before outputting it to the network connection means 110. After termination of the above processing, the network connection means 110 outputs a first redispatch request 803 to transmit mail arrival notice to the public network 112. However, since the terminal 113 is not ready for reception, the public network 112 returns first connection failure notice 804 to the network connection means 110. The contents of the first connection failure notice 804 are as shown in the transmission result notice of FIG. 9. Next, the network connection means 110 outputs a first transmission error 805 to the mail arrival notice means 108. The network connection control means 203 detects connection failure and the notice transmission means 202 transmits failed mail arrival notice to the retransmission control means 204. The retransmission control means 204 decides a retransmission interval and stores it in the retransmission data storage means 206. In this case, since mail arrival time is 12:30 and a retransmission interval is 30 minutes, 13:00 is stored in a scheduled retransmission time field 503 and an O mark is appended as a retransmission queue. The circle mark indicates that transmission data can be retransmitted and the retransmission suppression flag is not set. This is also true for the following description.

Next, if the second mail for the user go-inkyo arrives at the same time (806), since the terminal 113 cannot receive mail arrival notice, the same processing as between 801 and 805 is performed between 806 and 810. As a result, data on the second mail is added to the retransmission data storage means 206. This state is 902 of FIG. 11. Since the arrival of the second mail is also 12:30, scheduled retransmission time is 13:00 and an O mark is appended as a retransmission queue.

When the third mail 811 for user hachi arrives at 13:00, the notice transmission means 202 adds data to the transmission data storage means 109; this is a state indicated by 903. At this time, the notice transmission means 202 sets the retransmission suppression flag 505 to indicate temporary stop of retransmission of data of the first mail for the same user hachi as the destination of the third mail in the retransmission data storage means 206 and retransmission queue is marked with × mark as shown in 904. This is because the retransmission of the previous mail arrival notice is unnecessary as long as mail arrival notice for the third mail is attempted. Other processing on transmission is the same as for the first mail; the mail arrival notice means 108 outputs a third redispatch request 812 for the third mail to the network connection means 110, which outputs a third redispatch request 813 to the public network 112.

On the other hand, the notice transmission means 202 obtains time from the timer management means 107 to compare with data within the retransmission data storage means 206. The obtained data is 13:00, which is scheduled retransmission time of data of both hachi and go-inkyo. However, since the retransmission queue of data for the first mail of hachi is marked with × mark, the data is not retransmitted. Accordingly, only for retransmission data for the second mail for go-inkyo with the retransmission queue marked with an O mark, the mail arrival notice means 108 outputs a second retransmission request 814 to the network connection means 110, which outputs a second redispatch request 815 to the public network 112. Thereby,' the data for the second mail in the retransmission data storage means 206 is deleted by the retransmission data deletion means 205.

Since the terminal 113 cannot still receive mail arrival notice for this while, third connection failure notice 816 for a third transmission request 812 is returned from the public network 112, and a third transmission error 817 is returned to the mail arrival notice means 108 from the network connection means 110. Processing for the third transmission error 817 is the same as at the return of a first transmission error 804 for the first transmission request 802. Since this makes transmission processing for hachi unnecessary, the retransmission suppression flag 505 goes off and retransmission queue becomes an O mark. As a result, the transmission data storage means 109 becomes empty of data as shown in 907, and the retransmission data storage means 206 is stored with two pieces of data for hachi as shown in 908.

For the second retransmission request 814, since the terminal 113 is not ready for reception, second connection re-failure notice 818 is returned to the network connection means 110 from the public network 112, and a second retransmission error 819 is returned to the mail arrival notice means 108 from the network connection means 110. Processing for this is the same as at the return of a first transmission error 804 for the first transmission request 802. However, in this case, since retransmission is performed only once, the processing for the second mail terminates at this point, and data of the second retransmission request 814 is not stored in the retransmission data storage means 206. As a result, data of the transmission data storage means 109 and the retransmission data storage means 206 is unchanged.

Next, a first retransmission request 820 to retransmit the first mail delayed because of reception of the third mail is outputted to the network connection means 110. Data of the first mail is deleted from the retransmission data storage means 206 by the retransmission data deletion means 205, and only data for the third mail remains in the retransmission data storage means 206, as shown in 910. The network connection means 110 outputs a first redispatch request 821 to the public network 112, which performs first mail arrival 822 for the terminal 113. For the first mail arrival 822, since the terminal 113 is ready for reception, mail arrival notice from the mail delivery device 111 arrives successfully. The public network 112 outputs first connection success notice 823 to the network connection means 110, which outputs first transmission success notice 824 to the mail arrival notice means 108. Upon receipt of the first transmission success notice 824, the notice transmission means 202 uses the retransmission data deletion means 205 to delete all hachi data within the retransmission data storage means 206. As a result, the retransmission data storage means 206 becomes empty as shown in 912. The terminal 113 dials the mail delivery device 111 from a caller number contained in the received mail arrival notice and thereby can obtain mail text from the mail transmitting means 104.

As described above, in the first embodiment, setting of the retransmission suppression flag for retransmission data within the retransmission data storage means 206 produces the effect of avoiding redundant processing and redundant use of lines caused by the concurrent execution of transmission of mail arrival notice and data retransmission for the same user. The retransmission data deletion means 205 is provided to delete all retransmission data not yet transformed to a same terminal when transmission succeeds, thereby producing the effect of avoiding redundant processing, redundant use of lines, and redundant use of memory caused by the retransmission of arrival notice of mail already obtained by users.

In the present embodiment, the notice transmission means 202 obtains time of the timer management means 107 and determines whether to perform retransmission. The same effect is obtained by recording scheduled retransmission time in the timer management means 107 and notifying the notice transmission means 202 when the scheduled retransmission time is reached, to start transmission.

Although, in the present embodiment, the retransmission suppression flag has only the two states of being set and being not set, by use of the retransmission suppression flag as a flag for determining the number of mail arrival notices to the same user under transmission processing, it will be easily understood that not only the same effect is obtained, but also transmission processing for concurrent arrival of plural pieces of mail can be supported.

By providing a transmission suppression flag as well as the retransmission suppression flag for the transmission data storage means 109 and setting the flag for data having the same notice destination as data being transmitted to avoid processing for the data, it will be easily understood that the effect of avoiding concurrent transmission of plural mail arrival notices to the same user is obtained.

In the present embodiment, there is shown a case where, after transmission of mail arrival notice succeeds, all retransmission data for the same terminal is deleted. However, the same effect will be obtained by providing the retransmission data storage means 206 and the retransmission data deletion means 205 and/or the transmission data storage means 109 and a transmission data deletion means for it to delete all transmission data for a same terminal after transmission of mail arrival notice succeeds.

### (Second embodiment)

Next, a second embodiment of the present invention will be described. Since the second embodiment uses the same configurations shown in FIGS. 1 and 4 as the first embodiment, a description of the configurations will not be omitted. In the above first embodiment, when two pieces of mail, first mail and second mail, arrive in the same terminal, the retransmission suppression flag 505 is set to temporarily stop the retransmission of data of the first mail within the retransmission data storage means 206, and when arrive notice for the second mail fails, the flag is reset. In the second embodiment, however, if the second mail is received, data of the first mail within the retransmission data storage means 206 is deleted. That is, the number of pieces of hachi data in 908 of FIG. 11 is one.

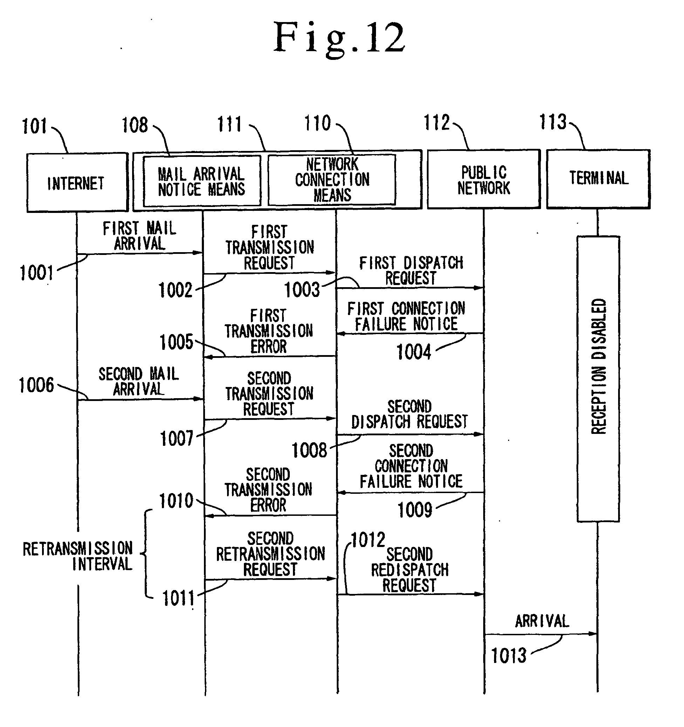

FIG. 12 is an operation sequence diagram in the second embodiment of the present invention. Hereinafter, the operation of the present embodiment will be described using FIG. 12. In the second embodiment, two pieces of mail, first mail and second mail, arrive in user hachi. In FIG. 12, when first mail 1001 arrives, the mail delivery device 111 transmits mail arrival notice, but since the terminal 113 is not ready for reception, the transmission of mail arrival notice fails. Therefore, processing in 1001 to 1005 is the same as that in 801 to 805 in the first embodiment; retransmission data of the first mail is stored in the retransmission data storage means 206.

Next, when second mail 1006 arrives, the mail delivery device 111 transmits mail arrival notice as described below in the same way as for the first mail. First, the mail receiving means 102 receives the first mail and stores it in the mail storing means 103. Next, the notice determination means 105 obtains user information from the user data storage means 106 and determines whether to report the arrival of the first mail, according to notice conditions. The mail arrival notice means 108 creates mail arrival notice and makes a request for mail arrival notice. The following processing is performed within the mail arrival notice means 108.

The mail arrival notice creation means 201 creates mail arrival notice. The notice transmission means 202 stores transmission data in the transmission data storage means 109, and requests the network connection control means 203 to transmit the notice. The network connection control means 203 converts the request into a format interpretable to the network connection means 110 before outputting the request to the network connection means 110. The retransmission data deletion means 205 deletes hachi data having the same notice destination as the transmission destination hachi of the second mail from the retransmission data storage means 206. Data of the first mail is deleted at this time. Processing in 1007 to 1010 is the same as that in 802 to 805 of the first embodiment. Since only hachi data for the second mail remains in the retransmission data storage means 206, a second retransmission request 1011, which is a retransmission request for the second mail, is transmitted. Processing for a second redispatch request 1012 and mail arrival 1013 is the same as that for the first redispatch request 821 and the first mail arrival 822 in the first embodiment.

As described above, in the second embodiment, when arrival notice of the first mail fails, retransmission data of the first mail is stored in the retransmission data storage means 1106, and when second mail for the same transmission destination as the first mail arrives, retransmission data of the first mail within the retransmission data storage means 1106 is deleted. This produces the effect of decreasing the number of transmissions of mail arrival notice and the amount of memory used.

### (Third embodiment)

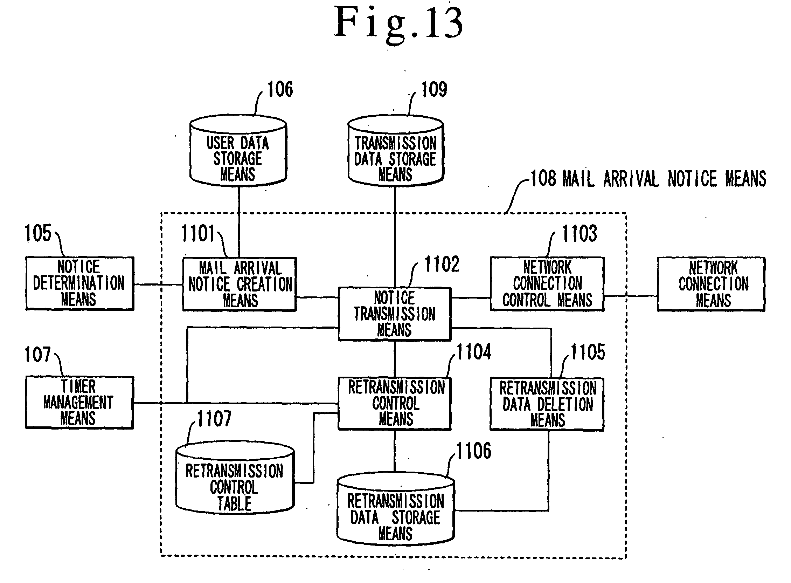

Next, a third embodiment of the present invention will be described. An overall configuration of a mail arrival notice system in the third embodiment is the same as that in the first embodiment as shown in FIG. 1, except that the configuration of the mail arrival notice means 108 is partially different. FIG. 13 shows a detailed structure of the mail arrival notice means 108 in the third embodiment. In FIG. 13, components 1101 to 1106 are respectively the same as 201 to 206 of FIG. 4 of the first embodiment. 1107 designates a retransmission control table storing transmission results of transmission result notice and corresponding processing steps.

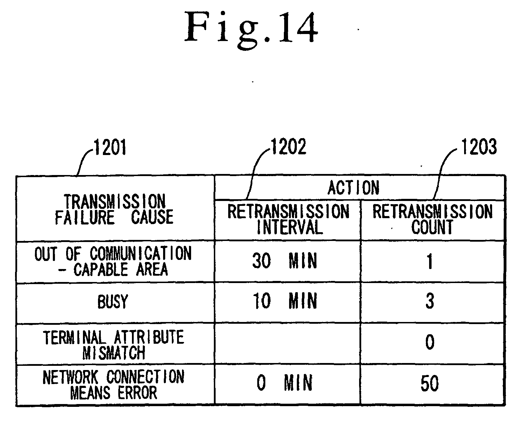

FIG. 14 shows fields of the retransmission control table 1107. In FIG. 14, 1201 indicates a cause of failure in mail arrival notice. FIG. 14 shows a case where ISDN or PHS lines are used as lines for mail arrival notice. 1202 and 1203 indicate action to be taken for network disconnection; 1202 indicates retransmission interval denoting a time interval from transmission failure to retransmission, and 1203 indicates retransmission count denoting the number of retransmissions. In FIG. 14, if failure in mail arrival notice is attributed to, e.g., "busy", since the call will end in several minutes, a retransmission interval is set to 10 minutes and a retransmission count is set to three times taking a possibly lengthy talk into account. For errors of the network connection means, since the mail delivery device is in trouble and restoration is probably possible, retransmission is performed many times without halt to hasten restoration (retransmission interval 0 minutes, retransmission count 50 times). In contrast, for terminal attribute mismatch, since restoration is probably impossible, retransmission is not performed (retransmission count 0). The same effect as the present invention would be obtained even if action includes only either of retransmission interval and retransmission count.

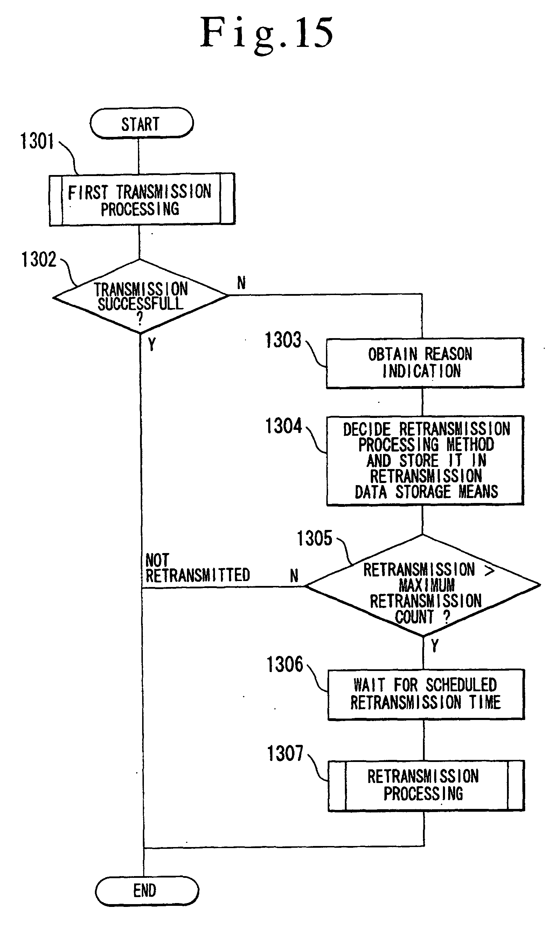

FIG. 15 is a flowchart showing processing of the third embodiment. The operation of the mail arrival notice system will be described using FIG. 15. When mail arrives, first transmission of mail arrival notice is performed in step 1301. This processing is the same as the transmission of mail arrival notice described in the first embodiment. Next, in step 1302, the result of transmission is determined. If the transmission results in success, the processing terminates, and otherwise, retransmission processing is performed. If the transmission results in failure, transmission result is obtained in step 1303. At this time, the notice transmission means 1102 receives a transmission error through the network connection means 1103 and also passes a network disconnection reason indicating a cause of the transmission error to the retransmission control means 1104. In step 1304, the retransmission control means 1104 obtains action corresponding to the network disconnection reason from the retransmission control table 1107. For example, if the transmission failure cause of the transmission error is "busy", transmission interval 10 minutes and retransmission count once are specified. The retransmission control means 1104 obtains scheduled retransmission time from the setting and creates retransmission data. In step 1305, whether to perform retransmission processing is determined from a retransmission count. If the retransmission count is 0 and retransmission is not performed, the processing terminates at this point. In step 1306, the system waits until the scheduled retransmission time is reached. When the scheduled retransmission time is reached, retransmission processing is performed in step 1307. This processing is performed as described below. The retransmission control means 1104 creates retransmission data according to the action and stores it in the retransmission data storage means 1106. Subsequently, retransmission processing is performed according to the data. If retransmission fails, the retransmission count is decreased as in the first embodiment, and when a remaining retransmission count is 0 and retransmission fails, the retransmission data is deleted.

As described above, in the third embodiment, by providing the retransmission control table 1107 storing the causes of failure in transmission of mail arrival notice and retransmission processing corresponding to the causes, retransmission processing can be appropriately performed for each of the causes of failure in transmission of mail arrival notice.

Although, in the third embodiment, retransmission count is used as a counter, the same effect is obtained by use of the retransmission in the form of a remaining retransmission point. Specifically, in the example of the third embodiment, when retransmission data is stored, 100 is given as an initial point, the retransmission point is decreased for each occurrence of errors, such as -100 for "out of the communication-capable area", -34 for "busy", immediate data discard for terminal attribute mismatch, and -2 for network connection means errors, and when the given point becomes 0 or less, the data is discarded.

### (Fourth embodiment)

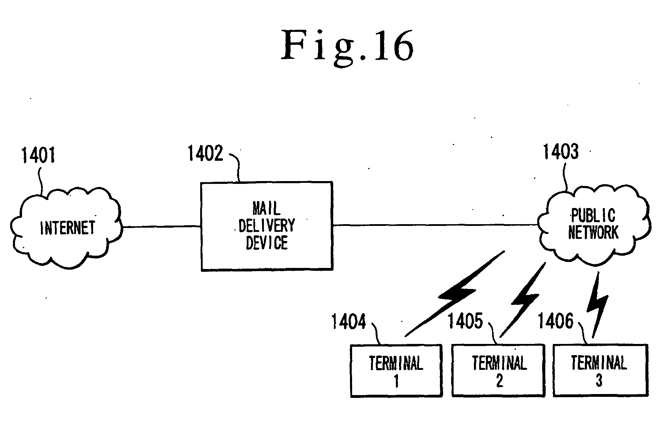

Next, a fourth embodiment of the present invention will be described. FIG. 16 shows the configuration of a mail arrival notice system in the fourth embodiment. The configuration in the fourth embodiment is the same as that in the first embodiment shown in FIG. 1, except that plural types of terminals are used. In FIG. 16, 1401, 1402, and 1403 correspond to 101, 111, and 112 in FIG. 1, respectively. 1404, 1405, and 1406 are respectively terminal 1, terminal 2, and terminal 3 that can receive mail arrival notice, and all of the terminals are used by the same user hachi. The configuration of a mail delivery device 1402 is the same as that in FIG. 1, and the configuration of the mail arrival notice means 108 is also the same as that in FIG. 4; the following description uses the reference numerals of components used in FIGS. 1 and 4.

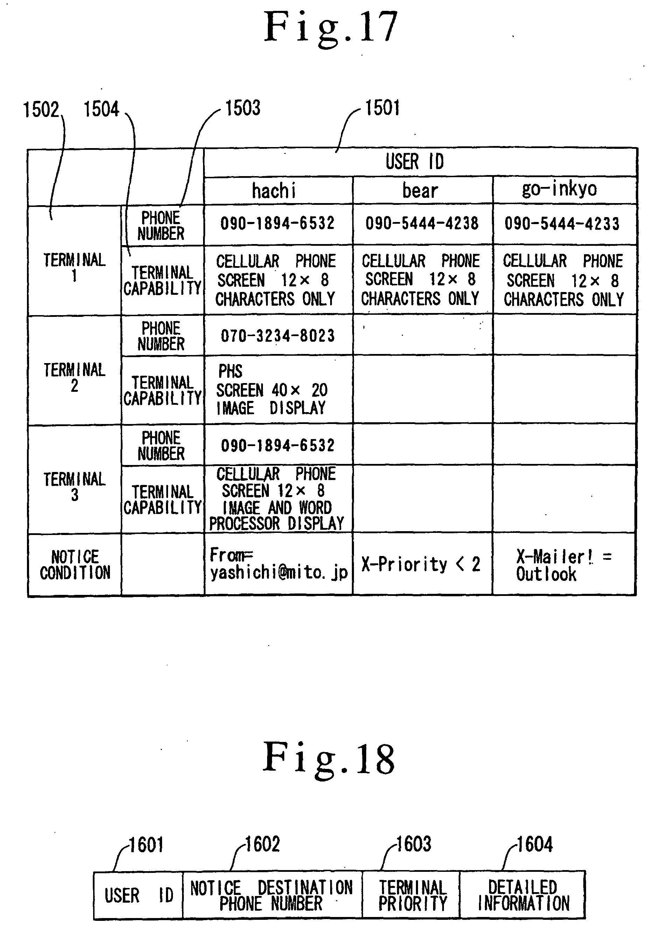

FIG. 17 shows a field structure of data fields of user data stored in the user data storage means 106 in the fourth embodiment. In FIG. 17, 1501 designates a user ID for identifying a user. 1502 designate terminal information storing information about of a terminal of the user. The order of terminal 1, terminal 2, and terminal 3 indicates priority; smaller numbers indicate higher priorities. Although, in this example, information about up to three terminals is stored, it will be easily understood that the same effect is obtained when the number of terminals is different. 1503 designates the phone number of a particular terminal. 1504 designates terminal' capability indicating the capability of a particular terminal. For terminal capabilities, this example shows only three types; terminal types of cellular phone, PHS, PDA, and the like, screen size indicating the size of terminal screen, and display formats of displayable characters, images, and documents. Other terminal capabilities may include types of central processing units, the capacity of memory and external storage, processing capability indicating whether programs can be downloaded, input and output means possessed by terminals, text size permitted for transmission and reception, and communication capabilities indicating communication speed. UAProf (User Agent Profiles) defined by CC/PP (Composite Capability/Preference Profiles) and WAP (Wireless Application Protocol) of W3C can be used as description format of terminal capabilities. 1505 designates notice conditions indicating conditions for mail notice; the same data as 303 in the first embodiment is stored.

FIG. 18 shows the field structure of mail arrival notice information created by the mail arrival notice creation means 201. In FIG. 18, 1601 designates user ID. 1602 designates the phone numbers of all phones owned by a user of mail arrival notice destination. 1603 designates terminal priority indicating the priority of terminal subject to mail arrival notice. 1604 designates detailed information in which notice contents are stored.

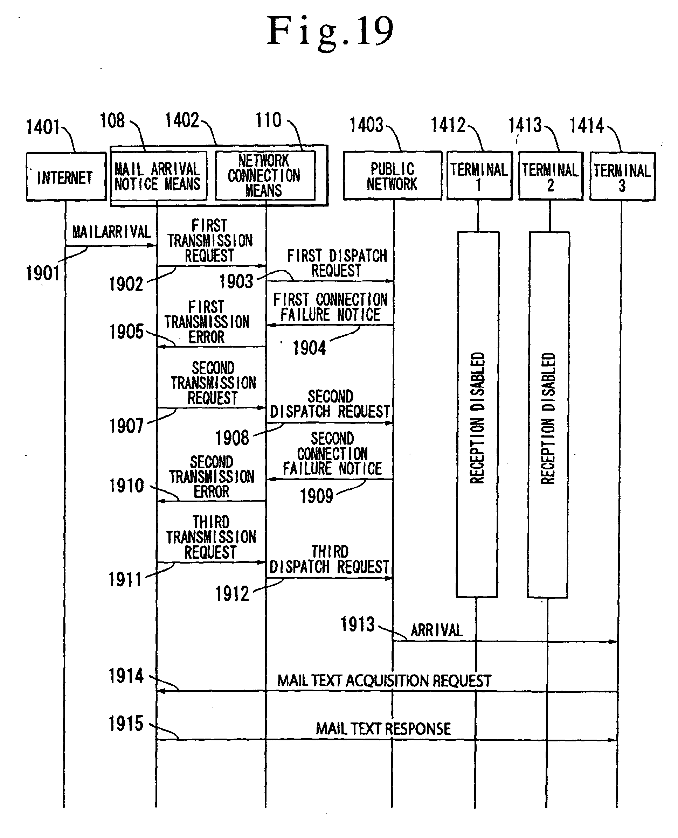

FIG. 19 is a sequence diagram for explaining priority mail arrival notice operation of the system in the fourth embodiment. Hereinafter, system operation in the fourth embodiment will be described with reference to the sequence diagram of FIG. 19. In the fourth embodiment, when mail arrives in user hachi (1901), the following processing is performed to output a first transmission request 1902. After mail receiving means 103 stores the mail in mail storing means 104, the mail arrival notice means 108 performs the following processing. The mail arrival notice creation means 201 obtains a terminal phone number from the user data storage means 106, and stores user ID and the terminal phone number in 1601 and 1602, respectively. Next, notice contents are decided and stored in the detailed information 1604. Next, the mail is analyzed and checked to see if it contains only characters, is attached with an image file, or attached with a document file. Priorities of the terminals of the user are decided from the mail contents and the terminal capabilities and stored in the terminal priority field 1603.

Priorities are decided as described below, for example. There are different cases, depending on mail contents.
(1) When only characters are contained in the mail
   Since all terminals can transmit, decreasing priorities are assigned to the terminal 1, terminal 2, and terminal 3 in that order. As a result, when transmission fails, transmission destinations change in the order of terminal 1, terminal 2, and terminal 3.
(2) When only an image file is contained in the mail
   Since cellular phones having the highest priority cannot output images, decreasing priorities are assigned to the terminal 2, terminal 3, and terminal 1 in that order. As a result, when transmission fails, transmission destinations change in the order of terminal 2, terminal 3, and terminal 1.
(3) When a document file and an image file are contained in the mail
   In the order in which more information can be displayed, decreasing priorities are assigned to the terminal 3, terminal 2, and terminal 1 in that order. As a result, when transmission fails, transmission destinations change in the order of terminal 3, terminal 2, and terminal 1.

In the present embodiment, the operation of the system in the case (1) of the mail containing only characters will be described. Also for the cases (2) and (3), in the same way, mail arrival notice can be transmitted according to priorities. In this case, decreasing priorities are assigned to the terminal 1 (1412), terminal 2 (1413), and terminal 3 (1414) in that order. Therefore, the notice transmission means 202, according to data of mail arrival notice information, outputs a request to report mail arrival to the terminal 1 having the highest priority to the network connection control means 203, and the network connection control means 204 outputs a first transmission request 1902 to the network connection means 110 in a format converted so as to be interpretable to the network connection means 110. The network connection means 110 outputs a first dispatch request 1903 to the public network, whereby the mail arrival notice can be transmitted to a desired terminal via the public network 112. The first transmission request 1902 and the first dispatch request 1903 are transmitted through phone call, ISDN, short messages and mail for mobile communications, and HTTP requests.

However, in the fourth embodiment, since the terminal 1 is not ready for reception (due to out of communication-capable area, no response from terminal, etc.), in response to the first dispatch request 1903, the public network 1411 outputs first connection failure notice 1904 to the network connection means 110. The network connection means 110, in response to the first connection failure notice 1904, outputs a first transmission error 1905 to the mail arrival notice means 108.

The mail arrival notice means 108 performs retransmission in the order of terminal priorities decided in the above processing. For the terminal 2, the mail arrival notice means 108 retransmits mail arrival notice.

Specifically, when the network connection means 110 receives the first transmission error 1905, the mail arrival notice means 108 obtains terminal priorities of a user to transmit the mail arrival notice to from the user data storage means 106, creates a second transmission request 1907 to output the mail arrival notice to the terminal 2, and outputs the request to the network connection means 110. The network connection means 110 outputs a second dispatch request 1908 to the public network 1403. However, since the terminal 2 is also not ready for reception like mail arrival notice to the terminal 1, a second connection failure notice 1909 is transmitted to the network connection means 110 from the public network 1403, and a second transmission error 1910 is transmitted to the mail arrival notice means 108 from the network connection means 110.

Next, the mail delivery device performs retransmission for the terminal 3. The mail delivery device 1402 operates as in the retransmission for the terminal 2, the mail arrival notice means 108 outputs a third transmission request 1911 to the network connection means 110, and the network connection means 110 outputs a third dispatch request 1912 to the public network 1403. Since the terminal 3 is ready for reception, mail arrival notice 1913 is made to the terminal 3.

It is assumed in the present embodiment that, upon receipt of mail arrival notice, the terminal 3 automatically obtains the mail. In this case, upon receipt of mail arrival notice, the terminal 3 outputs a mail text acquisition request 1914 to the mail delivery device 1402 via the public network 1403. The mail transmitting means 104 within the mail delivery device 1402, in response to the mail text acquisition request 1914, obtains mail from the mail storing means 103. Next, the mail transmitting means 104 obtains information of the terminal 3 from the user data storage means 106, and converts mail contents according to information thereof. Examples of conversion include image enlargement and reduction, tone reduction and image format conversion, and cutting of mail text length to a limit. Mail text is transmitted to the terminal 3 by mail text response 1915. As a result, the terminal 3 can automatically receive not only mail arrival notice but also mail text. The terminal capabilities of the terminal 3 may be specified in the mail text acquisition request so that the mail delivery device 1402 can easily convert mail contents as described above according to the specification.

As described above, in the fourth embodiment, by registering plural pieces of terminal information in the user data storage means and deciding a terminal of transmission destination from mail contents, notice conditions, and terminal capabilities when mail arrives, mail arrival notice can be made to a terminal in which obtained mail can be read in a format closest to the original.

In the fourth embodiment, if a table of correspondences between carriers of phone numbers and phone numbers of transmission destinations, and communication charges is provided and the mail arrival notice creation means assigns the highest priority to a terminal having the lowest communication charge, the effect of reducing communication charges for mail arrival notice can be obtained.

The same effect can be obtained by deciding priorities from one or more of the order of registrations by users, terminal capabilities, records of success rates and the like of past mail arrival notices, satisfied notice conditions, terminals recently used, and communication charges.

The same effect can also be obtained in the case where detailed information of mail arrival notice can be changed by terminal capabilities of transmission destinations.

When mail arrival notice is retransmitted to a terminal different from a previous terminal of transmission destination, if the notice transmission means transmits mail arrival notice information to the mail arrival notice means, and the mail arrival notice creation means creates different mail arrival notice, optimum notice for each of terminals can be transmitted.

Even if operation for acquiring mail text is not performed, mail arrival notice can be made. Also in the case where no terminal capabilities are specified in a mail text acquisition request, if the user's terminal capability information is obtained from the user data storage means and mail text is converted according to the information, mail of a format suited for a terminal can be created and transmitted to the terminal without the terminal doing anything.

### (Fifth embodiment)

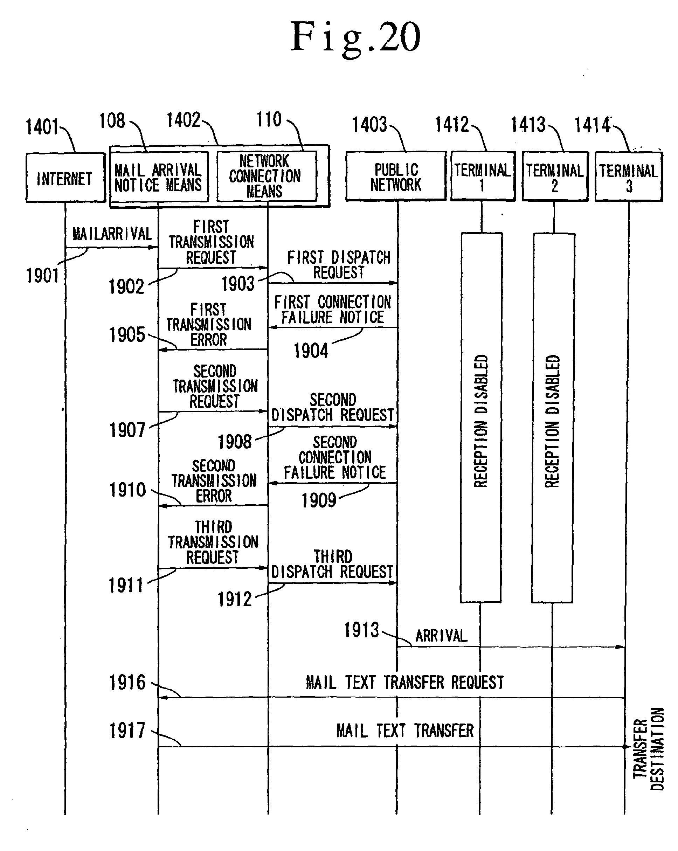

When mail arrival notice 1913 is made to the terminal 3 capable of reception as described above, in the case where the load of the terminal 3 would increase if the terminal 3 received mail text because incoming data is attached with a file, the terminal 3 can output a request to transfer the mail to other terminal having a relation with the terminal 3. FIG. 20 is a sequence diagram for explaining mail arrival notice and mail transfer operation accompanying it in a system of a fifth embodiment of the present invention that is in the above-described situation. In the fifth embodiment, the configuration of the mail arrival notice system is the same as that shown in FIG. 16. The fifth embodiment is also the same as the fourth embodiment, in that plural types of terminals are used.

Hereinafter, the operation of the system in the fifth embodiment will be described with reference to the sequence diagram of FIG. 20. In the sequence diagram, the following processing operations are the same as in the fourth embodiment: mail arrival 1901, first transmission request 1902, first dispatch request 1903, first connection failure notice 1904, first transmission error 1905, second transmission request 1907, second dispatch request 1908, second connection failure notice 1909, second transmission error 1910, third transmission request 1911, third dispatch request 1912, and mail arrival 1913.

In the fifth embodiment, the terminal 3 has a mail transfer instruction function, and upon receipt of mail arrival notice, requests mail transfer. In this case, upon receipt of mail arrival notice, the terminal 3 outputs a mail transfer request 1916 to the mail delivery device 1402 through the public network 1403. The mail transfer request contains the terminal ID of the terminal 3 itself and the phone number of a terminal of transfer destination as data. For the mail transfer request 1916, the mail transmitting means 104 within the mail delivery device 1402 obtains mail from the mail storing means 103. The mail transmitting means 104 transmits mail text to a specified terminal by mail text transfer 1917. As a result, since mail text that would be initially transmitted to the terminal 3 can be transmitted to the specified terminal without being transmitted to the terminal 3, the terminal 3 does not suffer an increased load due to reception data, and can receive the mail, using the terminal of a specified transfer destination.

The mail transfer request 1916 can be not only made in the terminal 3 but also transmitted through the terminal 1 or 2. If a terminal specified in the mail text transfer request 1916 is a terminal registered in the user data storage means 106 shown in FIG. 17, the mail transmitting means 104 within the mail delivery device 1402, after obtaining mail from the mail storing means 103 for the mail text transfer request 1916, may obtain information of the specified terminal from the user data storage means 106 and convert mail contents according to the information. The terminal capabilities of a terminal specified in the mail text transfer request 1916 are sent to the mail delivery device 1402, and the mail delivery device 1402 may convert mail contents according to the sent information, in the same way as described above.

As a variant of the fifth embodiment, instead of outputting the mail transfer request 1916, when mail receiving terminals 1, 2, and 3 are registered in the user data storage means 106, instructions to transfer arriving mail to at least part of the terminals, and data about a transfer destination terminal together are also stored, and when mail arrives in a terminal of interest (e.g., terminal 3), the mail may, without being transmitted to the terminal in which the mail arrives, be transferred to the transfer destination terminal. The instructions to be transferred to the user data storage means 106 is registered as one type of notice conditions. This enables the terminal 3 to receive mail using a specified transfer destination terminal, without suffering an increased load due to reception data. Especially, if registration of data about a transfer destination terminal is set for a terminal (e.g., terminal 3) having the lowest priority, when mail arrival notice is successively made to terminals with descending order of priority, the possibility that the mail arrival notice fails for the terminal having the lowest priority can be reduced, and a success rate of mail arrival can be increased.

As described in the fourth embodiment, in the case where priorities change among the terminals 1, 2, and 3, depending on the attribute of reception data, the following may be performed. That is, a dummy terminal (terminal 4) is additionally registered in the user data storage means 106 as a terminal having the lowest priority, the terminal 4 is registered with a transfer destination terminal specified, and mail arrival notice is made to the terminal 4 at the last stage of mail arrival notice processing so that mail is transferred to the transfer destination terminal.

The present invention has been described based on preferred embodiments shown in the drawings. It is apparent that those skilled in the art can change or modify the embodiments without departing from the spirit and scope of the present invention. The present invention includes such variants.

## Claims

1. A mail arrival notice system comprising: a mail delivery device for delivering mail received through the Internet to terminals; and terminals for requesting arrival notice of receive mail under conditions set in advance for said mail delivery device, wherein, when mail arrival notice to said terminals from said mail delivery device fails, said mail arrival notice data is stored, and the mail arrival notice is transmitted to said terminals again after a predetermined time elapses, while, when said mail arrival notice is successfully transmitted, said stored mail arrival notice data is deleted from said mail delivery device.

2. The mail arrival notice system according to claim 1, wherein, when said mail delivery device, after storing said mail arrival notice data, receives other mail directed to said terminals, it temporarily stops transmission of said stored mail arrival notice data, and releases said transmission temporarily stopped when arrival notice of said other mail fails.

3. The mail arrival notice system according to claim 1, wherein, when said mail delivery device, after storing said mail arrival notice data, receives other mail directed to said terminals, it deletes said stored mail arrival notice data.

4. The mail arrival notice system according to claim 1, wherein said mail delivery device can set any number of retransmissions of mail arrival notice.

5. The mail arrival notice system according to claim 1, wherein said mail delivery device changes conditions for transmitting mail arrival notice to said terminals, based on reasons for failure in transmission.

6. The mail arrival notice system according to claim 1, wherein, in the case where a user of said terminals has plural terminals of different types, when mail arrives in the user, said mail delivery device assigns priorities to said plural terminals and transmits mail arrival notice.

7. The mail arrival notice system according to claim 6, wherein said mail delivery device, when said mail arrives, assigns priorities to said plural terminals, based on one of mail contents, notice conditions, and terminal capabilities, or combinations of two or more of these items.

8. A mail delivery device in a system including the Internet for delivering mail, a mail delivery device, connected to the Internet, for creating mail arrival notice to notify terminals of the arrival of said mail, a public network, connected to said mail delivery device, for relaying said mail arrival notice, and terminals, connected to said public network, for receiving said mail arrival notice, wherein:
said mail delivery device includes: mail receiving means, connected to said Internet, for receiving said mail; mail storing means for storing said received mail; mail transmitting means for transmitting said received mail to said terminals; user data storage means for storing data of a user of a transmission destination of said mail as user information; notice determination means, when storing of said mail terminates and mail information containing information about a transmission destination of said mail is inputted, for obtaining said user information from the user data storage means and determining whether to perform said mail arrival notice; timer management means for performing timer management; mail arrival notice means for creating mail arrival notice from said mail information; transmission data storage means for storing transmission data of said mail arrival notice; and network connection means, connected to said public network, for transmitting said mail arrival notice to said terminals; and
said mail arrival notice means, when mail arrival notice to said terminals fails, transmits said mail arrival notice again to said terminals after a predetermined time elapses, and when said mail arrival notice is successfully transmitted, deletes said mail arrival notice data from the device.

9. The mail delivery device according to claim 8, wherein said mail arrival notice means include: mail arrival notice creation means for creating said'mail arrival notice from said mail and said user information; notice transmission means for creating a transmission request of said mail arrival notice and storing it in the transmission data storage means; network connection control means for converting said transmission request into a format interpretable to said network connection means; retransmission data storage means for storing retransmission data required to create a retransmission request, which is a next transmission request in the case of failure of said transmission request; retransmission control means for creating said retransmission request; and retransmission data deletion means for deleting said retransmission data within said retransmission data storage means according to the transmission request of said notice transmission means.

10. The mail delivery device according to claim 8, wherein said mail arrival notice means include transmission data deletion means, when mail arrival notice succeeds, for deleting transmission data of the same notice conditions for the same terminal within said transmission data storage means.

11. The mail delivery device according to'claim 9, wherein said mail arrival notice means, when receiving second mail for the same transmission destination as a transmission destination of first mail received previously by said mail receiving means, temporarily stop transmission of a retransmission request for said first mail.

12. The mail delivery device according to claim 11, wherein said mail arrival notice means, when mail arrival notice for said second mail fails after temporarily stopping transmission of said retransmission request, cancel the stop of transmission of said retransmission request for said first mail.

13. The mail delivery device according to claim 11, wherein said mail arrival notice means, when mail arrival notice for said second mail succeeds after temporarily stopping transmission of said retransmission request, delete all retransmission data for the same transmission destination.

14. The mail delivery device according to claim 9, wherein said mail arrival notice means, when receiving second mail for the same transmission destination as a transmission destination of first mail received previously by said mail receiving means, delete retransmission data for said first mail stored in said retransmission data storage means.

15. The mail delivery device according to claim 14, wherein said mail arrival notice means, when mail arrival notice of said second mail fail, store retransmission data for said second mail in said retransmission data storage means.

16. The mail delivery device according to claim 8, wherein said mail arrival notice means set said number of retransmissions of mail arrival notice.

17. The mail delivery device according to claim 9, wherein: said mail arrival notice means include a retransmission control table for storing correspondences between types of responses from said public network and next transmission processing methods; said network connection control means send a response of said public network to a transmission request of mail arrival notice created by said mail arrival notice creation means to said notice transmission means; said notice transmission means sends said response to said retransmission control means; said retransmission data storage means store, from said response and said retransmission control table, information required to create a retransmission request, which is a next transmission request in the case of failure of the transmission request; and said retransmission control means create said retransmission request.

18. The mail delivery device according to claim 8, wherein, in the case where a terminal user has plural terminals of different types, said mail arrival notice means register information of the plural terminals of said user in said user data storage means, and when mail arrives in the user, said mail arrival notice creation means assign priorities to said plural terminals and create mail arrival notice.

19. The mail delivery device according to claim 18, wherein, when assigning priorities to said plural terminals, said mail arrival notice creation means assign transmission priorities to terminals of transmission destinations, based on one of mail contents, notice conditions, and terminal capabilities, or combinations of two or more of these items.

20. The mail delivery device according to claim 18, wherein said mail arrival notice means have data of a table of correspondences between phone numbers of said plural terminals and information about charges for communications with said terminals, and assigns priorities to said plural terminals, using the information about charges for communications with said terminals.

21. The mail delivery device according to claim 18, wherein said mail arrival notice means have data of a table of correspondences between carriers of phone numbers and phone numbers of transmission destinations, and communication charges, and, when assigning priorities to said plural terminals, assigns the highest priority to a terminal having the lowest communication charge.

22. The mail delivery device according to claim 18, wherein, said mail arrival notice means, when said mail arrival notice is unsuccessfully transmitted, decide a terminal of a next transmission destination according to the transmission priorities of said terminals, and retransmits said mail arrival notice.

23. The mail delivery device according to claim 8, wherein, in the case where a terminal user has plural terminals of different types, said mail arrival notice means register information of the plural terminals of said user in said user data storage means, and when mail arrives in the user, said mail arrival notice creation means create contents of mail arrival notice in a format suited for a terminal of a transmission destination, based on one of mail contents, notice conditions, and terminal capabilities, or combinations of two or more of these items.

24. The mail delivery device according to claim 8, wherein, in the case where said terminals output a request to obtain mail text containing the terminal capabilities of said terminals and notice conditions after receiving said mail arrival notice, the contents of said mail are created in a format suited for the transmission destination terminal, according to said terminal capabilities and said notice conditions.

25. The mail delivery device according to claim 8, wherein, in the case where a terminal user has plural terminals of different types, information of the plural terminals of said user is registered in said user data storage means, and for at least some of the terminals, terminal information of transfer destination and transfer instructions are registered, the mail arrival notice means make mail arrival notice to said some of the terminals, and transmits arriving mail to a terminal of transfer destination.

26. The mail delivery device according to claim 18, wherein, for at least some of plural terminals owned by a user, terminal information of transfer destination and transfer instructions are registered, and in the case where mail arrival is accompanied by mail arrival notice to said some of the terminals, arriving mail is transmitted to a terminal of transfer destination.

27. The mail delivery device according to claim 8, wherein said terminals have a transfer instruction function, and after receiving mail arrival notice, transmit transfer instructions and terminal information of transfer destination to the mail arrival notice means, and upon receipt of the transfer instructions, the mail arrival notice means transmit arriving mail to a terminal of transfer destination.

28. The mail delivery device according to claim 8 in a system including the Internet for delivering mail, a mail delivery device, connected to the Internet, for creating mail arrival notice to notify terminals of the arrival of said mail, a public network, connected to said mail delivery device, for relaying said mail arrival notice, and terminals, connected to said public network, for receiving said mail arrival notice, wherein:
said mail delivery device includes: mail receiving means, connected to said Internet, for receiving said mail; mail storing means for storing said received mail; mail transmitting means for transmitting said received mail to said terminals; user data storage means for storing data of a user of transmission destination of said mail as user information; notice determination means, when storing of said mail terminates and mail information containing information about a transmission destination of said mail is inputted, for obtaining said user information from said user data storage means and determining whether to perform said mail arrival notice; timer management means for performing timer management; mail arrival notice means for creating mail arrival notice from said mail information; transmission data storage means for storing transmission data of said mail arrival notice; and network connection means, connected to said public network, for transmitting said mail arrival notice to said terminals; and
in the case where a terminal user has plural terminals of different types, information of the plural terminals of said user is registered in said user data storage means, and for at least some of the terminals, terminal information of transfer destination and transfer instructions are registered, and the mail arrival notice means make mail arrival notice to said some of the terminals and transmit arriving mail to a terminal of transfer destination.

29. A mail delivery device in a system including the Internet for delivering mail, a mail delivery device, connected to the Internet, for creating mail arrival notice to notify terminals of the arrival of said mail, a public network, connected to said mail delivery device, for relaying said mail arrival notice, and terminals, connected to said public network, for receiving said mail arrival notice, wherein:
said mail delivery device includes: mail receiving means, connected to said Internet, for receiving said mail; mail storing means for storing said received mail; mail transmitting means for transmitting said received mail to said terminals; user data storage means for storing data of a user of transmission destination of said mail as user information; notice determination means, when storing of said mail terminates and mail information containing information about a transmission destination of said mail is inputted, for obtaining said user information from the user data storage means and determining whether to perform said mail arrival notice; timer management means for performing timer management; mail arrival notice means for creating mail arrival notice from said mail information; transmission data storage means for storing transmission data of said mail arrival notice; and network connection means, connected to said public network, for transmitting said mail arrival notice to said terminals; and
said terminals have a transfer instruction function, and when said mail arrival notice means make mail arrival notice to the terminals, after receiving said mail arrival notice, transmit transfer instructions and terminal information of transfer destination to said mail arrival notice means, and upon receipt of the transfer instructions, the mail arrival notice means transmit arriving mail to a terminal of transfer destination.
